Europäisches Patentamt

European Patent Office

Office européen des brevets

(11) Publication number: **0 491 333 A2**

# EUROPEAN PATENT APPLICATION

(21) Application number: **91121552.3**

(22) Date of filing: **16.12.91**

(51) Int. Cl.⁵: **B29C 45/30**

(30) Priority: **19.12.90 CA 2032728**

(43) Date of publication of application:
**24.06.92 Bulletin 92/26**

(84) Designated Contracting States:
**AT BE CH DE DK ES FR GB GR IT LI LU NL SE**

(71) Applicant: **Gellert, Jobst Ulrich**
**7A Prince Street**
**Georgetown Ontario L7G 2X1(CA)**

(72) Inventor: **Gellert, Jobst Ulrich**
**7A Prince Street**
**Georgetown Ontario L7G 2X1(CA)**

(74) Representative: **Patentanwälte Grünecker,**
**Kinkeldey, Stockmair & Partner**
**Maximilianstrasse 58**
**W-8000 München 22(DE)**

(54) Injection molding probe with varying heat profile.

(57) An elongated injection molding probe having a central electrical heating element. The heating element is bent back upon itself a number of times to provide it with a number of longitudinal sections having different numbers of multiple runs of the heating element. This provides a varying heat profile along the length of the probe to compensate for different amounts of heat loss. The probe has a threaded bore at its rear end to facilitate removal from the mold.

FIG.1.

## BACKGROUND OF THE INVENTION

This invention relates generally to injection molding and more particularly to an elongated heated probe having a predetermined heat profile along different sections of its length.

Heated probes which are mounted to extend into an injection molding melt passage are well known in the art. For instance, the applicant's U.S. patent no. 4,376,244 which issued March 8, 1983 discloses an elongated injection molding probe having a central cartridge heater. The applicant's U.S. patent nos. 4,611,394 which issued September 16, 1986 and 4,777,348 which issued October 11, 1988 relate to heated probes having melt channels along a portion of their outer surface.

As seen in the applicant's U.S. patent no. 4,865,535 which issued September 12, 1989, it is also known to have an injection molding nozzle in which the electrical heating element is bent back upon itself to form longitudinal sections having double and triple runs of the electrical heating element. An injection molding probe having a double run of its heating element to provide additional heat adjacent the tip end and in the area of the locating pins is disclosed in the applicant's U.S. patent no. 4,820,147 which issued April 11, 1989. However, with the development of more complex systems having more cavities with less space between them and the use of higher temperature needs and heat sensitive materials, it is desirable to have elongated probes with a greater variation of heat profile along their length. This is particularly useful to process very small parts using engineering materials with narrow processing temperature windows.

## SUMMARY OF THE INVENTION

Accordingly, it is an object of the present invention to at least partially overcome the disadvantages of the prior art by providing an elongated heated injection molding probe having a heating element having a number of sections along its length with different heating which provide a varied heat profile along the length of the probe.

To this end, in one of its aspects, the invention provides an elongated injection molding heated probe having a generally cylindrical outer body with a rear end and a pointed forward end, an electrically insulated heating element which extends centrally in the outer body, the heating element extending generally longitudinally in the outer body from an external electrical terminal adjacent the rear end of the outer body, having the improvement wherein the longitudinally extending heating element is mounted in the outer body to bend back upon itself a plurality of times in a desired configuration to provide the heating element with a plurality of longitudinal sections of predetermined lengths having different numbers of multiple runs.

## BRIEF DESCRIPTION OF THE DRAWINGS

Figure 1 is a sectional view of a portion of a multi-cavity injection molding system showing a probe according to a first embodiment of the invention,

Figure 2 is a larger sectional view of the same probe seen in Figure 1,

Figure 3 is a cross section along line 3 - 3 in Figure 2,

Figures 4 - 6 show the heating element in various stages of assembly,

Figures 7A - 7D are cross sections along the heating element in Figure 6,

Figure 8 is a sectional view of the heating element assembled in an outer body with an electrical terminal ready for insertion into a vacuum furnace,

Figure 9 illustrates the assembly being inserted into the vacuum furnace,

Figure 10 is a schematic view showing a different configuration of the heating element according to a second embodiment of the invention, and

Figures 11A - 11D are cross sections along the length of the heating element shown in Figure 10.

## DETAILED DESCRIPTION OF THE DRAWINGS

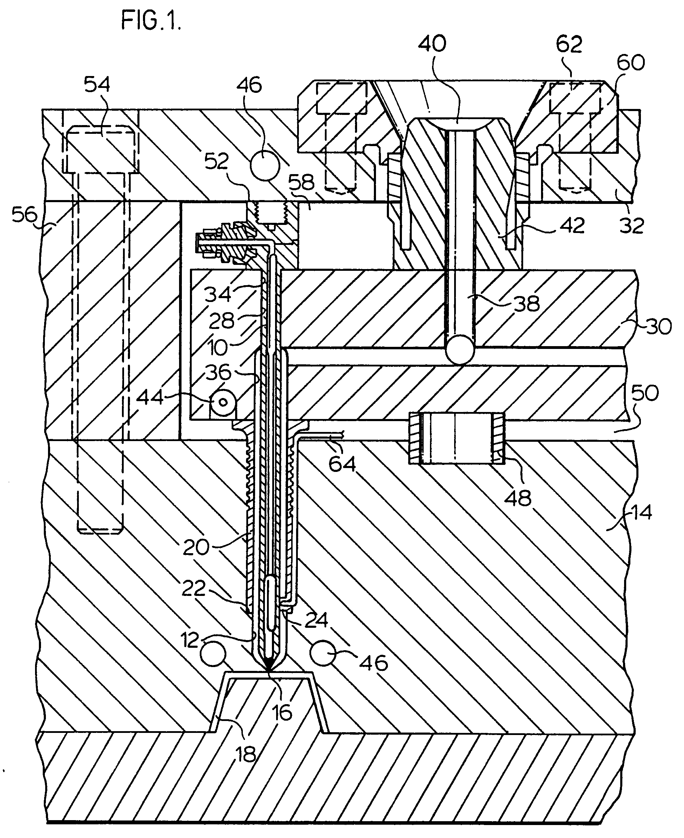

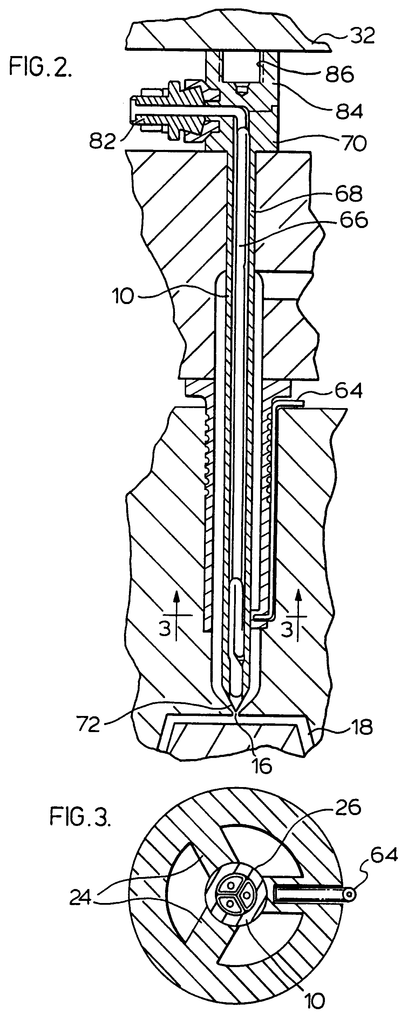

Reference is first made to Figure 1 which shows a portion of a hot tip gated multi-cavity injection molding system. A heated probe 10 is received in a well 12 which extends in a cavity plate 14 to a gate 16 leading to each cavity 18. The probe 10 is accurately located by a locating sleeve 20 which is seated in the well 12 against a circumferential shoulder 22. As best seen in Figure 3, the locating sleeve 20 has three radially locating fins 24 which extend inwardly to contact the outer surface 26 of the probe 10, similar to the pins shown in the applicants U.S. patent no. 4,820,147 which issued April 11, 1989.

The probe 10 also extends rearwardly through a bore 28 in a melt distribution manifold 30 which is mounted between the cavity plate 14 and a back plate 32. The bore 28 through the manifold 30 has a rear portion 34 and a forward portion 36. The diameter of the rear portion 34 is just large enough to snugly receive the probe 10 therethrough to prevent leakage of the pressurized melt between them. The forward portion 36 has a larger diameter which matches the inner diameter of the locating sleeve 20. A melt passage 38 leads from a common inlet 40 in a manifold extension 42 and branches in the manifold 30 to run around the probe 10 in the forward portion 36 of the bore 28 and in the well 12 to the gate 16. For ease of illustration and description, only one probe 10 is shown. However, normally the injection molding system will have a number of probes 10 mounted to extend in alignment with adjacent cavities, and the melt passage 38 will have a matching configuration to branch in the manifold 30 to extend to each probe 10.

The manifold 30 is heated by an electrical heating element 44 which is integrally cast into it as described in the applicants U.S. patent number 4,688,622 which issued August 25, 1987. The cavity plate 14 and the back plate 32 are cooled by pumping cooling water through conduits 46. The manifold 30 is located by a central locating ring 48 which is seated between the heated manifold 30 and the cooled cavity plate 14 and provides an insulative air space 50 between them. The back plate 32 is held securely against the rear ends 52 of the probes 10 by bolts 54 which extend through a manifold retainer plate 56 into the cavity plate 14. This similarly provides an insulative air space 58 between the heated manifold 30 and the cooled back plate 32. The manifold extension 42 is secured by a locating collar 60 which is fastened to the back plate 32 by bolts 62. A thermocouple 64 extends into one of the fins 24 to monitor the temperature of the melt flowing past it in the melt passage 38.

As seen in Figures 2 and 3, each probe 10 has an electrically insulated heating element 66 which extends centrally in a steel outer body 68. The outer body is generally cylindrical with an enlarged portion 70 at the rear end 52 and a pointed forward end 72 which is in alignment with the gate 16 leading to the cavity 18. In this embodiment, the heating element 66 has a nickel-chrome resistance wire 74 extending through a refractory powder 76 such as magnesium oxide in a steel casing 78. As described in more detail below, the heating element is bent back upon itself in a desired configuration to provide a number of longitudinal sections or zones having different numbers of multiple runs 80 of the heating element 66. The heating element 66 extends radially out through the outer body 68 adjacent the rear end 52 to an external electrical terminal 82. The electrical terminal 82 is made of a number of components as described in the applicants U.S. patent number 4,837,925 which issued June 13, 1989, to provide a threaded connection for a lead (not shown) from an external power source.

The outer body 68 also has a cap portion 84 adjacent the rear end 52. As can be seen, the cap portion 84 has a threaded removal bore 86 extending inwardly from the rear end 52. This is useful to receive a threaded bolt or tool to enable the probe 10 to be pulled out of the bore 28 through the manifold 30 for repair or replacement, if necessary.

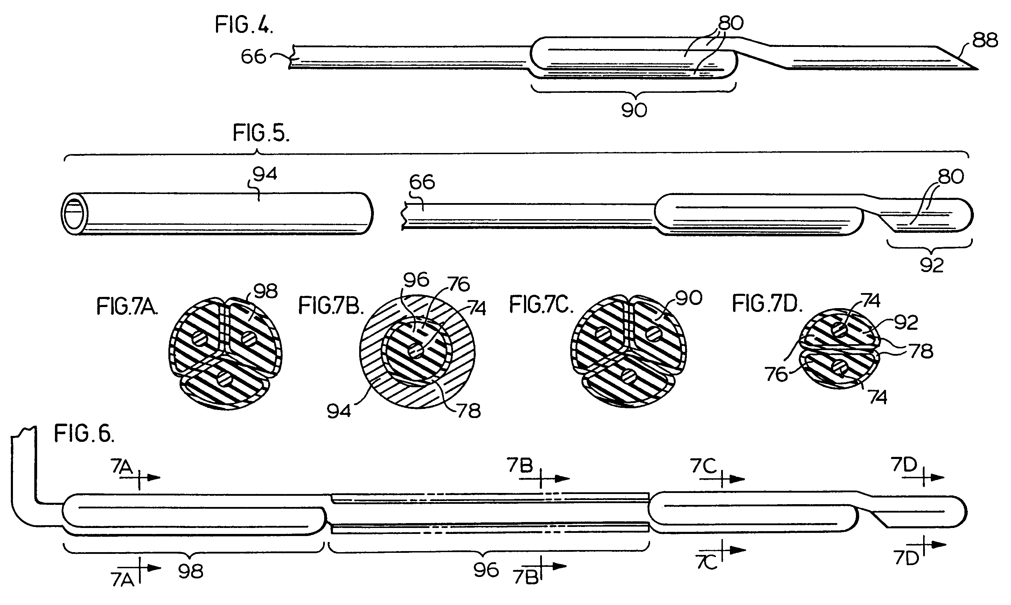

Reference will now be made to Figures 4 - 9 to describe the heating element 66 in more detail and also the method of making the probe 10. First, a length of heating element 66 is cut to have a diagonal end 88 as seen in Figure 4 to expose the internal resistance wire 74. The heating element 66 is bent back upon itself twice to provide a section 90 of a desired predetermined length having three runs 80 of the heating element 66. The heating element 66 is then bent back upon itself again to provide a section 92 of a predetermined length having two runs 80 of the heating element 66 terminating at the diagonal end 88. Next, as seen in Figure 5, a cylindrical steel filler sleeve 94 having a predetermined length and outer diameter is slipped over the heating element to provide a section 96 having only a single run 80 of the heating element 66. Finally, as seen in Figure 6, the heating element is bent back upon itself twice again to provide another section 98 of a predetermined length having three runs 80 of the heating element 66. As described in the applicants U.S. patent number 4,865,535 mentioned above, the double run section 92 and triple run sections 90, 98 of the heating element 66 are swaged in a die to give them the circular cross sections seen in Figure 7. As seen in Figure 7B, the outer diameter of the filler sleeve 94 is approximately the same as the outer diameter of the triple run sections 90, 98 of the heating element 66.

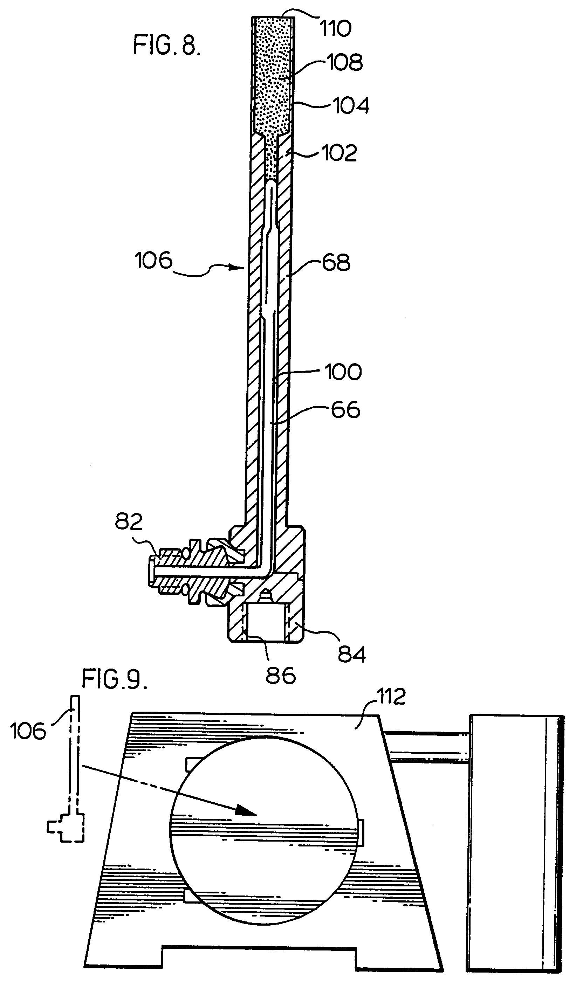

As seen in Figure 8, the heating element 66 is then inserted into a central bore 100 of the outer body 68. It is bent radially outward and the cap portion 84 and electrical terminal 82 are mounted in position. As can be seen, the outer body 68 has an extension 102 which forms a filler tube 104. The assembly 106 is oriented with the filler tube 104 upright and a predetermined quantity of nickel alloy powder 108 is poured into the filler tube 104 through the mouth 110. The assemblies 106 are loaded in batches into the vacuum furnace 112. As the furnace is begun to be gradually heated to a temperature of approximately 1925 F., it is evacuated to a relatively high vacuum to remove substantially all of the oxygen. Well before the melting point of the nickel alloy is reached, the vacuum is reduced by partially backfilling with an inert gas such as argon or nitrogen. When the nickel alloy melts, it flows by capilliary action down around the heating element 66 to the cap portion 84 and electrical terminal 82. This brazing in the vacuum furnace 112 provides a metallurgical bonding of the nickel alloy to the steel which improves the efficiency of the heat transfer from the heating element 66 and integrally joins all of the components

3

together. Of course, the nickel alloy contacts the resistance wire 74 at the diagonal end 88 which electrically grounds the heating element 66.

After the probes 10 are cooled and removed from the vacuum furnace 112, the probe is machined to remove the extension 102 from the outer body 68 and to form the pointed forward end 72. As will be appreciated, the heating element of the completed probe 10 has four longitudinal sections or zones 90, 92, 96, 98 with different numbers of runs of the heating element 66. The length of the different sections and the number of runs 80 of the heating element can be varied depending upon the application. In this embodiment, as shown in Figure 1, the triple run sections 90, 98 of the heating element extend adjacent the locating fins 24 and through the rear portion 34 of the bore 28 through the manifold 30 where there is greatest heat loss due to contact with the steel of the locating sleeve 20 or the manifold 30. The double run section 92 is adjacent the pointed forward end 72, while the remaining section 96 with the least heat loss is only a single run 80.

In use, the injection molding system or apparatus is assembled as shown in Figure 1. Electrical power is applied to the heating element 44 in the manifold 30 and the heating element 66 in each probe 10 to heat them to a predetermined operating temperature. Pressurized melt from a molding machine (not shown) is then injected into the melt passage 38 through the common inlet 40 in the manifold extension 42 according to a predetermined cycle in a conventional manner. The pressurized melt flows along around each heated probe 10 and through the gates 16 to fill the cavities 18. After the cavities are filled, injection pressure is held momentarily to pack and then released. After a short cooling period, the mold is opened to eject the molded products. After, ejection, the mold is closed and injection pressure is reapplied to refill the cavities. This cycle is continuously repeated with a frequency dependent on the size and shape of the cavities and the type of material being molded.

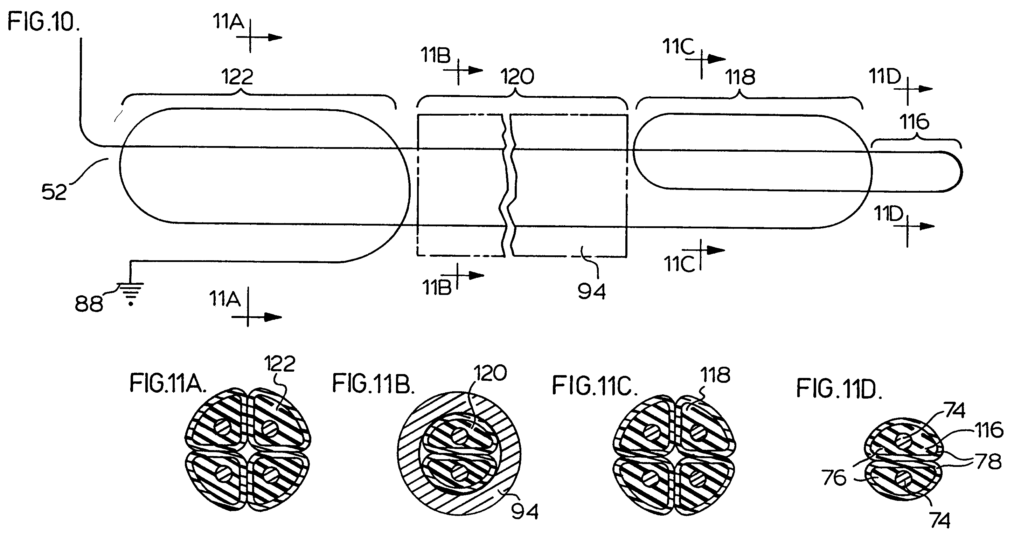

Reference is now made to Figures 10 and 11 to describe a second embodiment of the invention. As many of the elements of this embodiment are the same as those of the first embodiment, elements common to both embodiments are described and illustrated using the same reference numerals as shown schematically in Figure 10, in this embodiment, the diagonal end 88 of the heating element 66 is grounded adjacent the rear end 52. The heating element is given a configuration with a double run section 116 at the forward end, then a quadruple run section 118, a double run section 120, and finally another quadruple run section 122 adjacent the rear end 52. A filler sleeve 94 is provided around the double run section 120 to reduce the amount of nickel alloy powder required. Thus, it will be appreciated that a probe according to this embodiment will provide more heat along its length than a probe according to the first embodiment, except for adjacent the forward end 72 where it will be substantially the same.

While the description of the probes 10 and method of making them has been given with respect to preferred embodiments, it is not to be construed in a limiting sense. Variations and modifications will occur to those skilled in the art. For instance, other heating element configurations can be used having a plurality of longitudinal sections having different numbers of multiple runs. Reference is made to the appended claims for a definition of the invention.

**Claims**

1.  In an elongated injection molding heated probe having a generally cylindrical outer body with a rear end and a pointed forward end, an electrically insulated heating element which extends centrally in the outer body, the heating element extending generally longitudinally in the outer body from an external electrical terminal adjacent the rear end of the outer body, the improvement wherein:
    the longitudinally extending heating element is mounted in the outer body to bend back upon itself a plurality of times in a desired configuration to provide the heating element with a plurality of longitudinal sections of predetermined lengths having different numbers of multiple runs.

2.  An injection molding heated probe as claimed in claim 1 wherein the heating element has at least one longitudinal section with a single run of the heating element extending longitudinally therethrough, the single run of the heating element extending through a cylindrical filler sleeve having a predetermined length and outer diameter.

3.  An injection molding heated probe as claimed in claim 2 wherein the rear end of the outer body has a threaded removal bore extending therein.

FIG.1.

FIG.2.

32

86

84

82

70

68

66

10

64

3    3

72

18

16

FIG.3.

26

64

24

10

FIG.4.

FIG.5.

FIG.6.

FIG.7A.

FIG.7B.

FIG.7C.

FIG.7D.

FIG. 8.

FIG. 9.

FIG.10.

52

88

11A 11B 11C 11D

122 120 118 116

94

FIG.11A. FIG.11B. FIG.11C. FIG.11D.

122 120 118 116

94 78 74 76 74